# EUROPEAN PATENT APPLICATION

(11) **EP 4 597 400 A1**
(43) Date of publication of application: **06.08.2025**
(21) Application number: 24155447.6
(22) Date of filing: 02.02.2024
(51) Int. Cl.: G06Q 30/018, G06Q 20/06, G06Q 50/06, H04L 9/32, H04L 9/00

(54) **A COMPUTER-IMPLEMENTED METHOD AND SYSTEM FOR MANAGING A RE-SOURCE CONVERSION CHAIN**

(71) Applicant: Siemens Energy Global GmbH & Co. KG, 81739 München (DE)
(72) Inventor: Rathgeb, Andreas, 91099 Poxdorf (DE); Katrych, Sergii, 81825 München (DE)

(57) **Abstract**

A computer-implemented method and system for managing a resource conversion chain having resource production assets adapted to generate at least one resource and having conversion assets adapted to consume resources for generation of products, the method comprising the steps of: providing (S1) resource related data by records of the assets within the resource conversion chain; performing (S2) a compliance check to evaluate whether the resource related data provided by a record of an asset complies with machine interpretable requirements provided in a scheme; generating (S3) a non-fungible certificate token (CNFT) if the compliance check provides a positive evaluation result; and storing (S4) the generated non-fungible certificate token (CNFT) in a digital wallet.

## Description

### BACKGROUND

The invention relates to a computer-implemented method and a system for managing resources in a resource conversion chain, in particular the production and consumption of a resource such as energy, using non-fungible tokens.

Limitation of global warming requires greenhouse gas reduction. The IPCC (Intergovernmental Panel on Climate Change) has calculated a global budget of greenhouse gas emissions until the year 2050 to keep the global warming in the limits of 1,5°C to reduce environmental impacts on mankind. This budget is shared between all nations worldwide and governed by national law.

National governments therefore monitor and control the available energy budget with national energy specific registries and certificates, such as Guarantees of Origin (GoOs) per megawatt hour for electricity or proof of sustainability.

The main renewable energy sources are of biological or non-biological origin. For these energy types voluntary renewable energy certification schemes and recognized national regulations/registries do already exist.

Because of limited standardization and a lack of real-time data integration, all market players involved struggle with complexity and manual reporting to governmental recognized registries.

For electricity and for other energy types, national registries are used to provide certificates for each type of energy. An example is the register for electrical guarantees of origin (GOs). Each grid operator has to request issuing of produced and devaluation of consumed clean electricity of his grid connected renewable power producing plants.

The conventional technology as well as the existing procedures do not support on-time certificate compliance checks. Typically reporting periods are weeks or even months. If issues are detected at the end of the reporting period, typically a substantial part of incompliant energy may need mitigation and manual transactions. As a consequence, data integrity and transparency gets lost.

The conventional approach does not include all market players into the process. As a consequence, the energy producing economic operator, as well as the energy consuming economic operator are not involved in the reporting. The reporting is done in a conventional system for instance by the electrical grid operator who acts as a middle man and does manage the power purchase agreements (e.g. for electrical energy) with a lot of effort and with the inherent risk of data and integrity loss.

Accordingly it is an object of the present invention to provide a method and system to ensure that resources used in a resource conversion chain, in particular consumed energy, originate from renewable energy sources and are carbon-neutral.

### SUMMARY

This object is achieved by a computer-implemented method for managing a resource conversion chain comprising the features of claim 1 and by a system for managing a resource conversion chain comprising the features of claim 16.

The invention provides according to a first aspect a computer-implemented method for managing a resource conversion chain having resource production assets adapted to generate at least one resource and conversion assets adapted to consume resources for generation of products, the method comprising the steps of:
providing resource related data by records of the assets within the resource conversion chain;
performing a compliance check to evaluate whether the resource related data provided by a record of an asset complies with machine interpretable requirements provided in a scheme;
generating a non-fungible certificate token (CNFT) if the compliance check provides a positive evaluation result; and
storing the generated non-fungible certificate token (CNFT) in a digital wallet.

The provided resource related data record comprises in a preferred embodiment a non-fungible resource token (RNFT), in particular a non-fungible energy token (ENFT). A non-fungible energy token (ENFT) is a non-fungible resource token for the resource "energy".

A resource can also comprise for instance another consumed, stored or produced resource such as carbon dioxide.

The computer-implemented method for managing a resource con-version chain according to the present invention can be used to generate digital certificates for any relevant resource consumed, stored or produced in a resource conversion chain, in particular for resources having an impact on the environment. These environment relevant resources comprise for instance energy in different energy forms and emissions, in particular carbon dioxide.

The resource data record, i.e. the non-fungible resource token (RNFT), and the associated non-fungible certificate token (CNFT) comprise always a one-to-one link, so that the total data set with both parts (CNFT and RNFT) provide all information regarding the related real resource.

The invention provides according to a second aspect a system for managing a resource conversion chain (RCC) having resource production assets adapted to generate at least one resource and having conversion assets adapted to consume resources for generation of products, the system comprising:
data records of the assets within the resource conversion chain adapted to provide resource related data;
a processing unit adapted to run a smart contract executable code to perform a compliance check to evaluate whether the resource related data provided by a data record of an asset complies with machine interpretable requirements provided in a scheme;
a token generator adapted to generate a non-fungible certificate token (CNFT) if the compliance check provides a positive evaluation result; and
a digital wallet adapted to store the generated non-fungible certificate token (CNFT).

The observed worldwide climate change is caused to a major extent by the use of fossil energy sources, such as coal, oil and natural gas. In order to enforce a carbon neutral energy production, energy conversion and energy consumption the method and system according to the present invention establish a trusted, transparent incremental cross sector monitoring of clean energy and related resources.

The production and consumption of carbon neutral energy requires worldwide energy transfer. As a consequence diverse international regulations made for different energy carriers can be managed by the method and system.

To avoid greenwashing, the method and system apply a new certification principle. Other than purchasing e.g. electricity from coal fired power plants and clean energy certificates from existing market places separately (book & claim), the mass balancing principle applied by the method and system according to the present invention requires, that clean energy certificates can only be received from the contracted energy production asset. Moreover a compliant energy production and consumption can be tracked based on corresponding power purchase agreements.

The method and system according to the present invention allow to easily track the renewable aspect of energy throughout the resource conversion chain. The proof of compliance is provided fast and can be easily shared and reported in a transparent and traceable manner.

The method and system according to the present invention are able to manage accountability and liability of organizations.

The method and system according to the present invention apply a digital trusted technology, in particular a permissioned blockchain technology. A permissioned blockchain is a controlled and private network where access to participate and view the data is restricted to authorized entities.

A distributed ledger technology DLT is a special form of electronic data processing and storage. This storage allows subscribers of the network to have common writing and reading authorization. By contrast with a conventional centrally managed database, there is no need in this network for a central entity that performs new entries in the database. Unlike conventional distributed databases the distributed ledger technology applies a consensus mechanism. New data records can be added at any time by the subscribers themselves. A subsequent updating process ensures that the latest state of the database is always available to all of the subscribers. A particular configuration of the distributed ledger is a blockchain BC. The distributed ledger technology is a form of peer-to-peer network.

The consensus mechanism applied in the distributed ledger technology can comprise proof of work, proof of stake, proof of authority or any other consensus mechanism suitable for the respective use case.

The method and system according to the present invention enable digital trusted transactions with a distributed consensus mechanism. The system provides digital wallets to receive, store or send digital certificates and enables computation and networking in the cloud. The digital certificates comprise non-fungible certificate tokens (CNFT).

An asset is a technical entity that is adapted to produce, consume, process, store or to convert a resource such as energy. Each asset is owned by an organization.

A non-fungible token (NFT) is a digital object that is recorded on a blockchain and has a unique digital identifier A non-fungible token (NFT)is used to certify ownership and authenticity. It cannot be copied, substituted, or subdivided. Non-fungible tokens (NFTs) are unique cryptographic tokens that exist on a block chain and cannot be replicated.

Schemes comprise machine-readable representations of real world specifications and regulations. The schemes are used to evaluate and confirm compliance to these specifications and regulations inside the system. Schemes can be created according to scheme holder definitions. There can be different applicable schemes.

A scheme holder can define different applicable schemes for different use cases and/or for different resources, in particular for different energy types of produced or consumed energy such as Electricity Scheme, a Hydrogen(H2)-scheme or an E-fuel-Scheme and/or for different consumed and/or produced resources such a carbon dioxide (CO2).

In a possible embodiment of the computer-implemented method for managing a resource conversion chain the resource comprises energy.

Other resources can comprise for instance water or raw materials consumed during production of products by energy consuming production assets of the resource conversion chain.

In a possible embodiment of the computer-implemented method for managing a resource conversion chain a non-fungible energy token (ENTF) is generated automatically as soon as an incremental amount of energy is produced by an energy production asset and reported as energy related data by the energy production asset.

The system can produce incremental records (energy non-fungible tokens or ENFTs) per asset. The incremental record can be configured per product of an asset, so that amounts of energy or single products can be configured. One or several products can be configured per asset. This enables an on-time compliance check that can be executed depending on production instead of a fixed reporting time period.

The system makes use of non-fungible energy tokens (ENTFs) and of non-fungible certificate tokens (CNFTs). The non-fungible Energy token (ENFT) documents an incremental amount of energy with immutable and configurable data. The non-fungible certificate token (CNFT) documents the compliance to schemes that can derive from declarations.

In a possible embodiment of the computer-implemented method for managing a resource conversion chain the energy related data recorded in the non-fungible energy token (ENTF) is checked by a compliance algorithm against machine interpretable scheme requirements of a scheme provided by a scheme holder to generate an associated non-fungible certificate token (CNFT) if the compliance check provides a positive evaluation result.

In a possible embodiment of the computer-implemented method for managing a resource conversion chain the resource related data comprises near real time data including machine signals.

In a possible embodiment of the computer-implemented method for managing a resource conversion chain the resource related near real time data is monitored and communicated by a gateway of the respective asset or by a gateway of a site having several assets.

In a possible embodiment of the computer-implemented method for managing a resource conversion chain the resource related near real time data is received from other data providers, in particular from a grid operator or from a service provider.

In a possible embodiment of the computer-implemented method for managing a resource conversion chain the non-fungible energy token (ENTF) stores information comprising: an NFT Identifier, a signal identifier, an asset Identifier, a meter Identifier ID, an energy type, a token size of the token, a timestamp, a token quality, a total CO2 equivalent per amount of energy (MJ), and an energy amount per amount of resource product (e.g. m3 or kg)(so that a change of the token size does not require recertification).

In a possible embodiment of the computer-implemented method for managing a resource conversion chain the NFT identifier used to reference the associated non-fungible resource token (RNFT) and the generated non-fungible certificate token (CNFT) comprises additional certification information including the applied schemes, scheme versions of the applied schemes and the certification body.

In a possible embodiment of the computer-implemented method for managing a resource conversion chain the scheme comprises scheme metadata including a scheme title, a scheme holder, a scheme revision and a scheme validity of the scheme, communication restrictions, requirements regarding the certification process, requirements regarding the certificate holder, and requirements regarding the respective resource.

In a possible embodiment of the computer-implemented method for managing a resource conversion chain the non-fungible certificate token (CNFT) is transferred automatically between digital wallets of asset owners on the basis of a resource purchase agreement between the asset owners.

The certificate transfer can comprise a pay-as-produced transfer or a Pay-per-use transfer.

Each transfer is configurable according to a given purchase agreement if both parties, producer and consumer are registered inside the system. The system can e.g. reflect the validity of a contract between an electricity producer and a hydrogen producer, so that during the configured time the digital certificates can be exchanged automatically between the configured digital wallets. The "certificate transfer" can store the checksum of the corresponding purchase agreement for auditability.

In a possible embodiment of the computer-implemented method for managing a resource conversion chain the non-fungible certificate token (CNFT) is devaluated when the associated resource is consumed by a resource consumption asset and proof thereof is provided by the non-fungible resource token (RNFT) of the resource consumption asset.

In a possible embodiment of the computer-implemented method for managing a resource conversion chain the devaluation comprises a token time stamp devaluation.

There are two entities that have time stamps. These entities comprise the metered energy and the associated energy token (ENFT) in the system.

The devaluation of digital certificates is performed according to a metered resource consumption or, if no consumption has taken place, by expiration. Devaluation and expiration of digital certificates can be defined by the certification scheme and does happen automatically inside the system.

In a possible embodiment of the computer-implemented method for managing a resource conversion chain the non-fungible certificate token (CNFT) is devaluated automatically by expiration as defined in a scheme, in particular if no consumption has taken place.

In a possible embodiment of the computer-implemented method for managing a resource conversion chain the resource related data provided by a record of an asset within the resource conversion chain comprises resource origin data, resource amount data, resource type data, a resource production time or resource consumption time and asset property data.

### BRIEF DESCRPTION FIGURES

Embodiments of the different aspects of the present invention are described in more detail with reference to the enclosed figures.
Fig. 1 shows a flow chart to illustrate a possible exemplary embodiment of a computer-implemented method according to the present invention;
Fig.2 illustrates schematically the operation of a computer-implemented method in an exemplary system according to the present invention;
Fig. 3 illustrates a block chain which can be used in a possible embodiment of the method and system according to the present invention.

### DETAILED DESCRIPTION OF EMBODIMENTS

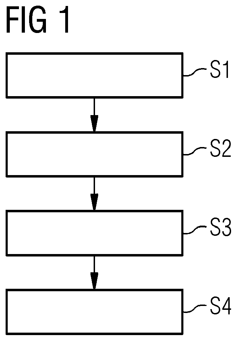

As illustrated in the flow chart of Fig.1 a computer-implemented method for managing a resource conversion chain RCC according to an aspect of the present invention can comprise several main steps S.

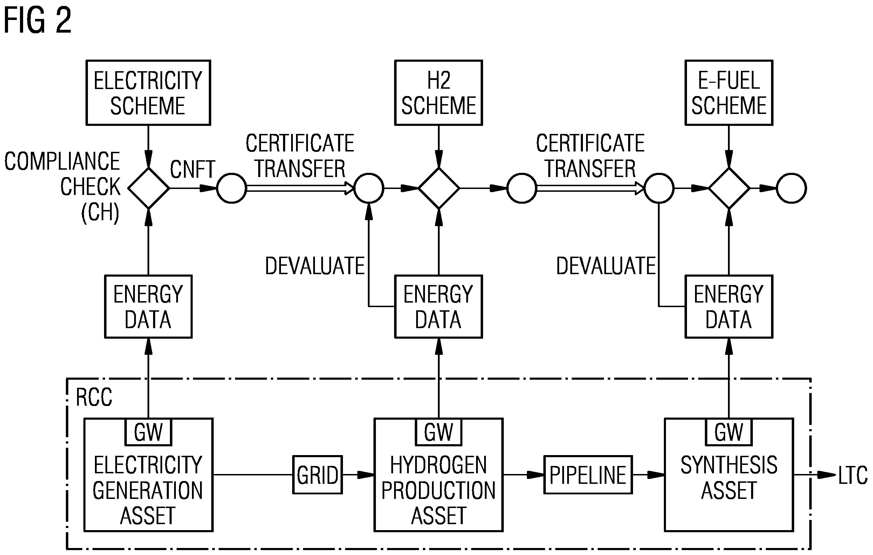

The resource conversion chain RCC comprises resource production assets adapted to generate at least one resource and conversion assets adapted to consume resources for generation of products or other resources as illustrated in Fig.2.

In the example illustrated in Fig. 2 the resource conversion chain RCC comprises three stages. The number of stages can vary depending on the use case. In an exceptional use case even a single energy producing/converting asset can use the technology. In this case, e.g. for an electrolyzer, the hydrogen produced can be tracked together with the consumed electricity. The electricity certificates may also be proven by traditional guarantees of origin. In the illustrated example of Fig.2 the produced and converted resource R comprises energy.

At a first stage of the resource conversion chain RCC electricity is generated by at least one electricity generation asset including one or more energy sources.

The energy sources can comprise renewable energy resources such as wind power plants, or photovoltaic module arrays and other energy sources such as nuclear power plants. Also conventional energy sources can be integrated in the system according to the present invention. The generated energy comprises energy of a certain energy type, e.g. electrical energy.

At a second stage of the resource conversion chain RCC hydrogen H2 is produced by at least one hydrogen generation asset receiving the electrical energy produced by the at least one electricity generation asset of the first stage of the resource conversion chain RCC via a power grid to produce hydrogen H2 (e.g. from H2O by electrolyse) .

At a third stage of the resource conversion chain RCC a synthesis product such as methanol is produced by at least one synthesis asset on the basis of hydrogen H2 produced by the at least one hydrogen generation asset of the second stage of the resource conversion chain RCC and received via a pipeline or other transport facilities.

The methanol produced at the third stage can then be transported in a logistic transport chain LTC to a plurality of consumers. In a possible embodiment the logistic transport chain LTC can comprise stages of its own. In a possible embodiment the logistic transport chain LTC is also integrated into the system according to the present invention.

Each site or asset of the resource conversion chain RCC and/or of the logistic transport chain LTC can comprise a gateway GW connected to the platform of the system according to the present invention to provide near real time data, in particular real time energy data.

As can be seen in the flow chart of Fig.1 in a first step S1 resource related data is provided by data records of the assets within the resource conversion chain RCC shown in Fig.2

In a preferred embodiment of the computer-implemented method a non-fungible energy token (ENTF) is generated automatically as soon as an incremental amount of energy or other resource is produced by an energy production or energy conversion asset of the resource conversion chain RCC and reported in near real time as energy related data by the energy production or conversion asset of the resource conversion chain RCC.

The generated non-fungible energy token (ENTF) can be stored in a site wallet of the respective asset.

The amount of energy or other resources can be measured by on site sensors of the respective asset to supply data to the respective gateway GW.

The data and/or the generated non-fungible energy token (ENTF) can be written into the last (still open) block B of a cryptographic block chain BC administered in a database DB of the system. As soon as the respective block B has been closed in response to an applied consensus mechanism such as proof of work (PoW) or proof of stake (PoS) the data written into the respective block becomes automatically immutable and cannot be changed.

In a further step S2 of the method shown in Fig.1 a compliance check is performed to evaluate whether the resource related data provided by a record of an asset complies with machine interpretable requirements provided in a scheme as also illustrated in Fig.2

The scheme is provided by scheme holder. There can be different schemes for different energy types as also illustrated in the example of Fig.2.

In a possible embodiment a compliance check is performed automatically for each stage of the resource conversion chain RCC.

For the near real time data provided (e.g. every second or minute) by the gateway GW of the at least one electricity generation asset and stored immutable in the database DB of the system a compliance check is performed by a compliance check algorithm with requirements defined in an Electricity Scheme.

For the near real time data provided by the gateway GW of the at least one hydrogen production asset a compliance check is performed automatically with the requirements defined in a Hydrogen(H2)-Scheme as shown in Fig.2.

For the near real time data provided by the gateway GW of the at least one methanol production asset a compliance check is performed automatically with requirements defined in an E-Fuel-Scheme as shown in Fig.2.

In a further Step S3 of the method illustrated in the flow chart of Fig.1 a non-fungible certificate token (CNFT) is generated if the compliance check of step S2 provides a positive evaluation result.

For instance a threshold value TH can be defined in an applied scheme that an electricity production asset is not allowed to generate more than 30g CO2-equivalent per 1 MWh of electrical energy. If the threshold value TH is exceeded no non-fungible certificate token(CNFT)is generated by the token generator of the system. In contrast if the measured and stored data indicates that the electrical energy has been produced by the asset with less than 30g CO2 equivalent per 1 MWh a non-fungible certificate token (CNFT) is generated automatically by the token generator of the system.

The generated non-fungible certificate token (CNFT) comprises in a preferred embodiment a reference to its associated non-fungible energy token (ENTF).

In a further step S4 the generated non-fungible certificate token (CNFT) is stored in a digital wallet.

The non-fungible certificate token (CNFT) generated in step S3 initially belongs to the asset owner and is stored in step S4 in the digital wallet of the asset owner.

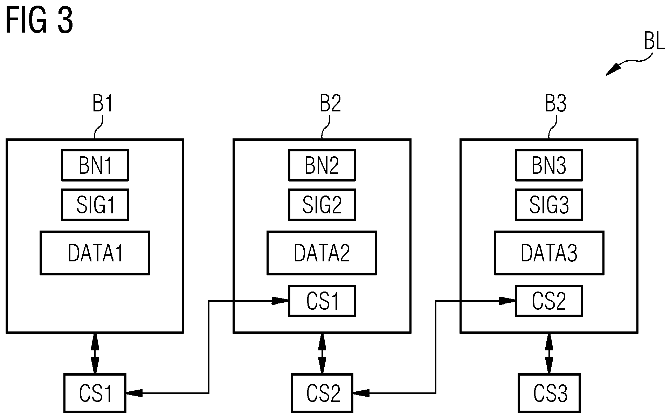

As illustrated in Fig.3 data provided by assets of the resource conversion chain RCC shown in Fig.2 is written in a preferred embodiment of the method in blocks B of a cryptographic blockchain BC. The blockchain BC comprises a first genesis block (block B1) and a number interlinked blocks. Each block B can comprise a block number BN, a nonce, the data, its hash value (checksum CS) and the hash value of the preceding block B.

A blockchain BC is a continuously extendable list of data records that are concatenated to one another by cryptographic methods. Each block B typically contains a cryptographically secure checksum CS of the preceding block, and also possibly a timestamp TS and further transaction data.

In the present exemplary embodiment, the blockchain BC has a first data block B1 with a first data record and a second data block B2 with a second data record and also a third data block B3 with a third data record. In the course of conformity tracking, a first step comprises first producing the first data block B1, with which the blockchain BC begins. Further steps comprise adding the second data block B2 with the second data record and also the third data block B3 with the third data record, and thus extending the block chain BC.

Each of the data blocks B1, B2, B3 has an assigned calculated checksum CS1, CS2, CS3, such as for example a hash value. For determining the checksum CS e.g. a SHA-256 algorithm (secure hash algorithm) can be used.

The respective data blocks B1, B2, B3 can have a block number BN1, BN2, BN3 representative of the respective position of the block in the block chain BC. One or more digital signatures SIG 1, SIG 2, SIG3 are representative of the respective validators . The blocks B1, B2, B3 comprise data DATA1, DATA2, DATA3 and blocks B2, B3 comprise for conformity tracking the respective checksum CS1, CS2 of the respective preceding blocks B1, B2.

Thus, the first data block B1, since it is the first data block B1 of the blockchain BC (also called genesis data block), does not have a checksum CS of a preceding block. The second data block B2 has the first checksum CS1 of the first data block B1 and the third data block B3 has the second checksum CS2 of the second data block B2.

It can also be the case that one of the data blocks B1, B2, B3 is in the form of a smart contract. Smart contracts are contracts on a software basis in which a wide variety of contract terms and conditions can be stored. During the course of the contract, certain linked actions (for example payments) can be performed independently when there is a corresponding trigger (for example fulfillment of contract terms and conditions).

In a possible embodiment the database DB (or the database system) can be for example a DLT based system (DLTS) or a cryptographic block chain BC and a data block can be a block B of the block chain BC or of the DLTS. A data block B can for example comprise details pertaining to the size (data size in bytes) of the data block, a data block header (block header), a transaction counter and one or more transactions.

The data block header can for example comprise a version, a concatenation checksum, a data block checksum CS, a timestamp TS, proof-of-work, a proof of stake or a proof of authority verification and a nonce (one-time value, random value or counter used for the proof-of-work verification).

A data block B can for example also be just a specific memory area or address area for the total data stored in the distributed database system/the network application. It is thus possible for example for block-less distributed database systems, such as for example the IoT chain (ITC), IOTA and Byteball, to be realized. These involve in particular the functionalities of the blocks B of a blockchain BC and of the transactions being combined with one another such that for example the transactions themselves protect the sequence or chain of transactions (of the distributed database system/the network application)(that is to say store them in a security-protected fashion, in particular).

To this end, for example a concatenation checksum can be used to concatenate the transactions themselves with one another in that a separate checksum or the transaction checksum of one or more transactions is used as the concatenation checksum, which is stored in the corresponding new transaction as well when a new transaction is stored in the distributed database system/the network application. In such an embodiment, a data block B can for example also comprise one or more transactions, wherein, in the simplest case, for example one data block corresponds to one transaction.

Within the context of embodiments of the method and system , a "block chain node", "node", "node of a distributed database system/the network application" can comprise a device. These devices can for example comprise field devices, cell phones, computers, smartphones, clients or subscribers that perform operations for (with) the distributed database system/the network application (for example a block chain BC). Such nodes can for example perform transactions of a distributed database system/a network application or the data blocks thereof or insert or concatenate new data blocks B with new transactions into the distributed database system/the network application by new data blocks.

In particular, this validation and/or concatenation can be performed by a trusted node (for example a mining node) or solely by trusted nodes. A trusted node is for example a node that has additional security measures (for example firewalls, access restrictions to the node or the like) in order to prevent manipulation of the node. Alternatively or additionally, a trusted node can for example store a node checksum (for example a digital signature or a certificate) in a new data block when the new data block is concatenated with the distributed database system/the network application.

It is thus possible in particular to provide evidence indicating that the corresponding data block B has been inserted by a specific node or indicating its origin. The devices (for example the corresponding device) are for example devices of a technical system and/or industrial plant and/or of an automation network and/or of a production installation that are in particular also a node of the distributed database system/the network application.

The devices in this instance can be for example field devices or devices in the Internet of Things IoT that are in particular also a node of the distributed database system/the network application. Nodes can for example also comprise at least one processor, for example in order to perform their computer-implemented functionality.

Within the context of embodiments of the method and system according to the present invention, a "concatenation checksum" CS can be understood as meaning a checksum that in particular indicates or references the preceding data block of the distributed database system (or of the network application)for a respective data block of the distributed database system (or of the network application) (frequently referred to in specialist literature in particular as "previous block hash").

This in particular involves an applicable concatenation checksum CS being formed for the corresponding preceding data block. A transaction checksum or the data block checksum of a data block B (that is to say an existing data block of the distributed database system or of the network application) can be used for example as the concatenation checksum, in order to concatenate a new data block with an (existing) data block of the distributed database system (or of the network application).

It is however also possible for example for a checksum CS to be formed on the basis of a header of the preceding data block or on the basis of all of the preceding data block and used as concatenation checksum. This can for example also be calculated for multiple or all preceding data blocks. It is for example also feasible for the concatenation checksum CS to be formed on the basis of the header of a data block and the data block checksum. However, a respective data block B of the distributed database system (or of the network application) advantageously comprises a respective concatenation checksum CS that was calculated for or relates to a preceding data block, in particular even more advantageously the directly preceding data block, of the respective data block B.

It is for example also possible for a corresponding concatenation checksum CS to be also formed only on the basis of a part of the corresponding data block B (for example preceding data block). This allows for example a data block that comprises an integrity-protected part and an unprotected part to be realized. This allows for example a data block B whose integrity-protected part is invariable and whose unprotected part can also still be altered later to be realized. Integrity-protected is intended to be understood here as meaning in particular that an alteration of integrity-protected data can be established by a checksum.

In a possible embodiment the system provides accounts for energy and resource producers, their sites and assets. The system further provides accounts for energy and resource consumers, their sites and assets. The system can also provide accounts for certification bodies. The system can also provide accounts for scheme holders to maintain their schemes. The system enables approvals for enabling certification.

The system can connect to machine signals, provided by meters or automation/control entities via gateways GW of the different involved assets.

The energy related data recorded in the non-fungible energy token (ENTF) is checked in step S2 of the computer-implemented method shown in the flow chart of Fig.1 by a compliance algorithm against machine interpretable scheme requirements of a scheme provided by a scheme holder to generate automatically in step S3 of the computer-implemented method an associated non-fungible certificate token (CNFT)if the compliance check performed in step S2 provides a positive evaluation result.

The applied scheme can comprise in a possible embodiment of the computer-implemented method a scheme of an energy type. In a possible embodiment a scheme holder may hold more than one scheme. In a possible implementation the scheme holder can offer a suitable scheme applicable for the compliance checks. An offered scheme can be selected by the asset owner.

The asset owner can have a contract with a certification body that does audit his asset against the selected scheme. The certification body must therefore be entitled to assess this scheme. The entitlement is given to the certification body by the scheme holder.

The method and system can produce incremental records (energy non-fungible tokens or ENFTs) per asset. The incremental record can be configured per product, so that amounts of energy or single products can be configured. This enables on-time compliance check that can be executed in step S2 depending on production instead of a fixed reporting time period.

Each record can provide data, such as the energy origin, upper or lower caloric energy amount, time of production or devaluation, properties of the energy producing asset, other. The provided data are evaluated in step S2 automatically against a set of machine interpretable requirements.

The system provides sets of applicable digital requirements called schemes, which represent e.g. a set of legal or voluntary or self-declared machine interpretable requirements that can be checked continuously in step S2 against the incremental energy records.

The system can - in case of positive evaluation results- produce in step S3 automatically certificates CNFTs (non-fungible certificate token), each with a 1:1 link to the associated non-fungible resource token (RNFT), in particular to an associated non-fungible energy token ENFT.

An energy certification service can be provided to track the environmental impact of the entire production process. It covers a variety of certification schemes for renewable and low-carbon electricity, hydrogen, e-fuels, and other energy carriers as well as for resources, such as carbon dioxide.

Additionally, the certification system connects physical assets to a distributed ledger technology (DLT of infrastructure. The implemented DLT system provides for the certificate's verification, interoperability, tamper-proof authentication, and portability across the different industrial sectors.

Once qualified the digital certificate or token is issued instantly, automatically, and in accordance with legal or market requirements.

All relevant information needed to prove a sustainable origin and carbon footprint of a green or low-carbon product is included in the digital certificate.

The digital energy certificates, i.e. the generated non-fungible certificate token (CNFT), ensure traceability of the carbon footprint of energy products, energy imports, and energy consumption. It provides proof of the reduced carbon intensity. The system serves as a trusted and transparent certification platform for the entire resource conversion chain RCC. Therefore it can support different types of certification schemes in alliance with well-known international scheme holders such as ISCC or TUV.

Accredited certification bodies are entitled to assess those certification schemes.

The traditional plant audits (initial and repetitive) can be enhanced by the system, taking real-time production data into account. As before, the standard audit covers the requirements that can only be checked by humans. In addition, a selection of digitally available signals can be used to enable continuous monitoring of compliance.

For monitoring of compliance relevant real-time data, a communication interface to the relevant plant instrumentation is implemented, i.e. a gateway GW).

By the time the energy production asset within the conversion chain is set "in operation" inside the system, real-time energy data can be continuously stored inside an non-fungible energy token (ENTF). Each non-fungible energy token (ENTF) represents a configurable portion of certifiable energy, e.g. 1kg hydrogen. The non-fungible energy token (ENTF) records energy data which needs to be checked by the compliance algorithm against assigned scheme requirements (e.g. CMS 70: CO2equivalent threshold).

As soon as the general compliance is confirmed and the asset is set to "certified" by a certification body inside the system, incremental certificates are issued as non-fungible certificate tokens (CNFTs) inside the digital wallet of the commercial operator.

To protect the system from green-washing, the system according to the present invention does not support "book-and-claim" principles, but supports "mass-balancing". To achieve this, the transfer of digital certificates can in a possible embodiment of the method and system only be executed, if an underlying Power Purchase Agreement (PPA) is confirmed. The signatures of both parties (e.g. economic operator of electricity generation asset and electricity consumer) are recorded inside the system, so that audits can be performed at any later point in time.

Each transfer of a digital certificate is configurable according to a given power purchase agreement if both parties, producer and consumer are registered inside the system. The system can for example also reflect the validity of a contract between an electricity producer and a hydrogen producer, so that during the configured time the digital certificates can be exchanged automatically between the configured digital wallets of the respective asset owners.

The devaluation of digital certificates can be performed according to a metered energy consumption or, if no consumption has taken place, by expiration. Expiration of digital certificates can be defined by the certification scheme and does happen automatically inside the system.

Following the resource conversion chain RCC shown in Fig.2 , the devaluation of energy certificates is used to report a compliant use of clean energy for the succeeding stages of the resource conversion chain RCC.

In addition to the creation, transfer and devaluation process, each economic operator can be responsible for reporting of clean energy production and cancellation of electricity certificates to an official registry. This is useful to avoid double counting and fraud.

An organization inside the system is a legal entity that provides information to or consumes information from the system. An organization comprises at least one user. The initial user registers the organization in onboarding activities.

There are different roles that organizations can have within the system:
- asset owner - legal owner of an asset
- asset operator (a company that operates the plant on behalf of an asset owning company)
- asset operator - Producer (e.g. wind park operator)
- asset operator - ProSumer (e.g. electrolyzer operator)
- asset operator - Consumer (e.g. logistician consuming e-fuels)
- Implementation Service Provider - company that implements the gateway to connect assets to the system
- Auditor (certification body) - company entitled to state compliance according to an applied scheme
- System Operator - company providing support (certification expert) and software maintenance for the system
- Cloud Operator - company providing computing services in the cloud
- governmental authority

The system supports the configuration of users

A user may also be a non-human entity, that is capable of interacting e.g. via API with the system. Such an entity is always assigned to an organization, so that any harm can be linked to an organization.

Organizations of different roles can interact for the purpose of energy certification. For example an asset operating company of a site selects an auditing organization. This selection enables the user of that auditing organization to get access to the data of the operating organization. The auditing organization may then also be entitled to activate or deactivate the continuous certification.

Digital wallets are used in the system to store value in a secure way. The digital wallets are equipped with keys. Keys can also be used for signatures.

Depending on the organization role the digital wallet may have different purposes. For example for an asset operator, each site can comprise its own digital wallet. The site wallets can be used to collect the non-fungible energy token ENFT and the non-fungible certificate token CNFT. The keys are used for signature of transfers as well.

For a certification body, the digital wallet does provide the keys for certification.

In general, the token type applied by system is non-fungible (NFT) and has a unique identifier.

Each token comprises recorded data that is immutable when minted. Each token has an owner. This is achieved by assignment to a digital wallet. Each token can be transferred by configurable transfers from one digital wallet to another digital wallet. The token stores data, according to certification requirements.

Non-fungible tokens (NFTs) are useful in providing security. Information stored on an immutable cryptographic block chain cannot be accessed, stolen, or used by anyone that does not have the fitting keys.

A non-fungible token (NFT) is unique and irreplaceable, making it impossible for one non-fungible token to be "equal" to another. Non-fungible tokens (NFTs) are digital representations of entities and have been likened to digital passports because each token contains a unique, non-transferable identity to distinguish it from other tokens. Non-fungible tokens are also extensible, meaning that one can combine one NFT with another NFT to create a third, unique NFT.

The system makes use of non-fungible resource tokens (RNFTs), in particular of non-fungible energy tokens (ENTFs), and of non-fungible certificate tokens (CNFTs). The non-fungible Energy token (ENFT) documents an incremental amount of energy with immutable and configurable data. The non-fungible Certificate token (CNFT) documents the compliance to schemes that derive from e.g. voluntary declarations. In general a non-fungible resource token (RNFT) can document a (measured) incremental amount of a resource R, in particular environment relevant resource, being produced, stored or consumed within the resource conversion chain RCC. The environment relevant resources comprise inter alia energy, raw and intermediary materials, gas emissions and water resources.

Energy producing and energy consuming companies within the resource conversion chain RCC comprise one or many sites.

Each site of an energy producing or energy consuming company comprises associated site information, such as site name, address and location (coordinates), that identifies the respective site. Each site can have one or many assets. Each site is owned by an organization.

The asset provided at a site comprises a technical entity that is adapted to produce, consume, process, store or to convert a resource such as energy. Each asset is owned by an organization. The asset may be operated by an additional entitled organization.

Each asset has a name and a verifiable asset identifier. Each asset can have associated additional information. Such information can be requested by certification schemes, so that the system can check them in step S2 of the method regarding compliance.

An asset can be created, read, updated and removed within the system. The asset does represent a physical entity. Each asset is part of exactly one site. Each asset can comprise at least one energy output meter which is used for tokenization.

Assets can have several balance meters to enable green house gas (GHG) calculation.

Several assets per site can be configured. The data to be configured can include information for downstream checks, e.g. asset type, installed capacity, GPS location, asset lifecycle information.

Several assets per site can be configured. The data to be configured can include information for downstream checks, e.g. asset type, installed capacity, GPS location, asset lifecycle information.

Energy data is of static or dynamic nature. For incremental clean energy certification both is supported by the system.

Dynamic energy information requires online digital asset communication whereas more static information can be managed also by humans, e.g. representatives of asset owner or auditor. In case human data relevant for certification is entered, a validation signature by an author and validation by a notified body may be applied. Information is exchanged via digital communication and interfaces where applicable.

Energy commercialization depends on energy type and national regulations. Power purchase agreements (PPA) are used for long-term trading.

For certification of electrical energy with the system, power purchase agreements (PPAs) are considered. Further online trading contracts can be taken into account. Therefore an interface that supports fast communication is implemented.

Power purchase agreements PPAs range typically over years. They are essential for financing power plants and play a major role for de-carbonization. Power purchase agreements are closed between mid and large energy producers and utilities or companies. Power purchase agreements are mostly managed outside of the system. An energy contract is achieved via several commercial states (request, offer, order, order confirmation) before energy is delivered and payed.

To comply with "mass balancing" principles the system requires verifiable proof of an existing contract with digital identity of energy provider and energy consumer, amount of energy and agreed guarantee of origin (GO).

The accountability and the liability of information stored in non-fungible energy token (ENTF) or other non-fungible resource tokens (RNFTs) resides within the asset owner organization.

Each type of resource, in particular energy, has different stages or states that are required for certification. Each resource is produced, transferred, stored and finally consumed.

Energy data associated with energy that is physically transported from a producer to consumer may be transferred and devaluated according to contracts and proven consumption data.

More precisely energy as a resource is available in different energy types comprising:
- mechanical energy
- electrical energy
- chemical energy
- thermal energy
- nuclear energy
- radiation energy

Energy carries have different physical states at normal condition:
- gaseous, e.g. Hydrogen, Ammonia
- liquid, e.g. e-fuels
- solid, e.g. biomass, ammonium nitrate

Each type of energy can be tracked in increments, e.g. 1 MWh, 1 kWh, 1MJ, 1 kg, 1 m³.

Each energy increment is auditable, for example with data stored in a token.

A non-fungible energy token (ENTF) as used in the system can be adapted to store inter alia the following information:
- NFT-ID
- Gateway ID
- Asset ID
- Meter ID
- Signal ID
- Token size
- Production time stamp begin
- Production time stamp end
- Token quality (good or bad)
- Total CO2eq per token
- MJ Energy (for RFNBOs)

The energy token data enables to trace back to related information, such as, address of commercial operator, producer of consumed energy, (e.g. windfarm electricity), location of site, meter data, gauging certificates and so on.

Each energy increment can comprise or refer to by ID to state specific information, in particular:
- plant owner/operator
- plant auditor/notified body
- energy producing predecessor organization, site and asset (e.g. Windfarm )
- time properties such as production time, transfer time, storage time, consumption time
- locations assigned, e.g. location of production, transfer locations, storage locations, consumption location
- meter data, provided by a (gauged) energy meter, e.g. meter identity, meter accuracy and gauging certificate
- signal data with signal name, signal designation, value, unit, flow direction, time stamp, quality parameters such as purity and CO2 footprint, communication quality (good, bad, uncertain)
- end-to-end trustworthiness including signature and/or encryption

In case the energy is fed into a grid (electricity, gas, fuel), the consumed energy is physically not identical. The system is not able to detect the physical flow, but can assure a proper balance of the grid's in- and output for the certified energy.

If the owner of a non-fungible energy token (ENTF) withdraws from the systems, his energy data can still be assigned to a system wallet. This allows to perform later audits. A token cannot be removed from the system.

The token size value (e.g., 1, 10, 100) and unit can also be set. The unit can be selected from a dropdown list. Only units relevant for the energy type can be selected (e.g., kWh, MWh for electricity).

Energy other than electricity requires specification of amount of energy per token. The unit of the energy is MJ. In case of energy the value is calculated by a processor of the system.

In case of hydrogen H2 or e-fuels, a lower caloric value can be specified e.g.in energy per amount, such as MJ per kg or MJ per m³.

To support greenhouse gas balancing, a fixed CO2 equivalent value per each non-fungible energy token (ENTF) can be specified with kg or g units per mass or volume of resource/energy. A fixed CO2 equivalent value divided by the energy amount per token can be used for comparison with scheme requirements to detect the violation of a set threshold.

In a possible embodiment the token size can be changed independent from renewable characteristics. The definition of the lower caloric value and CO2 equivalents per resource/energy allows to change the token size without loss of approval by the certification body.

The configuration of one or several balance meters supports additional features:
- Online tracking (of e.g. the energy amount for processing)
- Devaluation of received clean energy certificates received from upstream energy providers (e.g. electricity or hydrogen energy providers)

For a maximum of connectivity, the system can support different field level protocols for meter communication such as Modbus TCP and OPC UA.

Data privacy is required for personal data. In addition, data might need protection due to intellectual property (e.g. production data). Therefore, the energy increment data is not transferred and kept in the digital wallet of the commercial operator. Encryption and access control to data is supported where applicable.

There is asset specific information required for evaluation of compliance to a given scheme. Such information that is not part of publically available certificates is only visible to the assigned certification body.

Schemes are machine-readable representations of real world specifications and regulations. The schemes are used to evaluate and confirm compliance to these specifications and regulations inside the system. Schemes can be created according to scheme holder definitions. They can be revised and discarded. The applied scheme can comprise in a possible embodiment a scheme associated with a specific an energy type.

Each asset owner has to comply with the scheme defined in his energy contract. If the asset owner is using the system to digitally comply with the chosen schemes, the asset owner must let a notified body audit his asset accordingly.

For each scheme supported by the system, a regulatory body (e.g. CMS 70 TUV) can entitle an auditor to perform the local site audit and confirm the compliance inside the system. Therefore only auditors that are available in the system can be chosen by an asset owner.

Published schemes in general provide the following information:
- Scheme metadata, e.g. Scheme title, scheme holder, revision, validity
- Scope of application
- Communication restrictions
- Requirements regarding certification process
- Requirements regarding certificate holder
- Requirements regarding energy

As part of the scheme a conformity algorithm is used. The conformity algorithm is applied to an asset energy output and creates a non-fungible certificate token (CNFT) if the energy input, the energy output and the asset specific parameters comply with the scheme requirements.

The system does record conformity in incremental clean energy certificates. The certificate lists the applicable energy and scheme data accordingly.

The applied conformity algorithm can be documented and logged for later audits. The applied algorithm documentation may be part of the certificate or just be available via the portal of the system.

For each energy type produced by an asset a scheme can be created, read, updated and discarded. There can be regulatory, voluntary and self-declared schemes.

Recognized schemes are introduced by independent scheme holders (e.g., ISCC, REDcert, RSB), who are officially recognized by the competent authority (e.g. by the EU Commission).The requirements of the recognized scheme can be managed inside the system in a library that is continuously updated according to real world stipulations. Therefore, the system operator may install a certification expert or provide an e.g. graphical scheme configuration software module. The schemes can be validated and signed by the scheme holder. In a preferred embodiment the schemes are published in machine readable format by the scheme holders.

Voluntary schemes or standards for voluntary markets can be introduced by scheme holders (e.g. TUV SUD for CMS 70, ISCC for ISCC Plus) without official recognition by a governmental authority.

As a certificate with little effort a self-declaration may exist, that an energy producer can configure and sign. Such a self-declaration does not require an audit by 3rd party. It provides a traceability inside the system better than existing solutions but not on the level of voluntary or regulatory schemes.

Digital Clean Energy Certificates can have different states.

Digital Clean Energy Certificates can be issued, transferred and devaluated. Certificate transfers between asset owners are also illustrated schematically in Fig.2.

A digital certificate, i.e. a CNFT, is issued, if the energy increment is produced, at least compliance to a scheme is confirmed and compliance of the asset is stated by the auditor. The owner of each new digital certificate is the energy producer.

In a possible embodiment a transfer of digital certificates as shown in Fig.2 can only be performed on the basis of an existing signed power purchase agreement PPA. This transfer is performed automatically. If more than one power purchase agreement exists for a given type of energy, the system provides means to configure transfers of digital certificates accordingly, e.g. proportional transfer.

To support a trusted mass balancing of renewable energy, digital certificates can be transferred from a producer to a consumer. To start a transfer, a certificate transfer needs to be configured.

The configuration of a certificate transfer can require the specification of the following data fields:
- Hash reference
- Producer
- Consumer
- Certificate transfer type
- Validity of transfer

The energy purchase agreement hash reference is the fingerprint of the externally signed contract between energy producer and consumer. The hash is required for audits to prove, that the certificate has been handed over to the consumer based on an existing signed energy/power purchase agreement according to mass balancing principle.

The pay-as-produced type as a certificate transfer type of the transfer does push automatically all digital certificates produced to the consumer wallet. The specified start and end date and time can be considered for pushing digital certificates.

A user may save and send the certificate transfer, which can be tracked in the block chain database. After sending, the consumer can see the transfer in his transfer page. The consumer can then check the provided certificate transfer and accept it. As a consequence the producer of the energy can see the new signed status of the certificate transfer. Finally, the producer needs to activate the transfer of certificates. The automatic transfer does then forward all certificates accordingly.

A digital certificate can be devaluated as illustrated schematically in Fig.2 if the owner is entitled to do this or the energy is consumed and proof therefore is provided by the energy consumer. Clean energy certificates exist inside the system and can be shown and reported externally.

A digital certificate is a compilation of trusted and verified data including in a possible embodiment:
- issuer, e.g. certification authority CA or trust center
- owner, who holds the certificate
- assigned power purchase agreement (PPA)
- production asset
- location of production asset
- a timely validity
- list of compliant schemes (regulatory and voluntary)
- applied conformity algorithm
- predecessor of the resource such as energy (e.g. Windfarm electricity as predecessor for hydrogen).

This information may be part of the published information or, as an alternative be only provided in the online portal with the help of the system.

Each certificate is digitally signed and can be validated at any time after issuance. Therefore a machine readable identifier can be available (e.g. QR-code). Each digital certificate or a sum value can be published for visualization on external websites per producer or consumer.

If a party wants to archive information outside of the system, it can export the information e.g. as pdf-files. ( The only liable proof is the CNFT inside the blockchain. The exported information (e.g. PDF, CSV) can be referred to as a declaration. Such a declaration has a disclaimer, which points out, that the proof needs to be checked in the blockchain.

With the method and system of the present invention the worldwide energy processing and conversion chains can be digitally managed and compliance can be locally reported. Instead of long monitoring periods with manual tasks, digital on-time certification can be executed. Digital certificates can be immediately produced and handed over to a consumer. The producer and consumer can directly report a compliance without intermediaries (e.g. a grid operator). The mass-balancing principle can be proven due to configuration and signature on certificate transfers. Registries can be synchronized to act as supervisor. Registries can be released from performance consuming real-time data processing.

The system provides an enhanced clean energy certificate utilization.

Clean energy certificate utilization is limited due to several regulatory constraints, such as:
- availability of sufficient energy capacity, with required qualities to feed the demand
- temporal correlation, to resolve grid storage limitation
- regionality and geographical correlation, to manage energy flow bottle necks (point of grid injection, transfer capacity, point of grid extraction)
- servicability, to integrate clean energy flow into the grid with minimized impact on the grid stability

In addition market participants require to simplify procurement with minimized dependencies regarding sustainable qualities of traded energy:
- energy purchasing contracts (PPA) over the counter, e-auction
- option-business

The system according to the present invention does therefore support in a preferred embodiment the devaluation of the consumed clean energy:
- precise allocation to the relevant product or good
- maximizing utilization of renewable quality and
- monitizing of unused certificates
- exploitation of GHG removal quality

The system can support in a possible embodiment different ways of certificate transfer, in particular a Pay-as-produced transfer and a Pay-per-use transfer.

In a Pay-as-produced certificate transfer all certificates minted by an asset/meter are pushed to one or several consumers (split range).

In a Pay-per-use certificate transfer only required certificates are pulled from contracted producer or trader wallets on demand.

Initially metered demand is collected precisely until the token size for a new E-NFT (e.g. hydrogen) is completed.

The demand is then covered with what is left over from previously devaluated C-NFT token (e.g. electricity).

In a Pay-as-produced transfer all contracted suppliers have delivered token with required last time slot.

In a Pay-per-use transfer all digital wallets with option to pull from have been checked.

Left over tokens stay in the digital wallet for e.g. further monetization.

### Pay-as-produced: transfer by consumer

Pay-per-use (pay what is consumed): further selling by producer

Unused certificates can expire according to applied regulation.

The system provides in an embodiment for an automated devaluation. A consumer can source individual best fitting certificates from several producers. A consumer (pull mode) or a producer (push mode) can collect surplus digital certificates for transfer to other registries (book & claim) for monetization. Digital certificates associated with little or no energy are avoided in the system. Billing can be based on optimized utilization of green electricity.

The different embodiments of the method and system according to the present invention as described above can be combined with each other.

## Claims

1. A computer-implemented method for managing a resource conversion chain (RCC) having resource production assets adapted to generate at least one resource and having conversion assets adapted to consume resources for generation of products, the method comprising the steps of:
providing (S1) resource related data by records of the assets within the resource conversion chain (RCC);
performing (S2) a compliance check to evaluate whether the resource related data provided by a record of an asset complies with machine interpretable requirements provided in a scheme;
generating (S3) a non-fungible certificate token (CNFT) if the compliance check provides a positive evaluation result; and
storing (S4) the generated non-fungible certificate token (CNFT) in a digital wallet.

2. The computer-implemented method for managing a resource conversion chain according to claim 1 wherein the resource comprises an environment relevant resource, in particular energy or carbon dioxide.

3. The computer-implemented method for managing a resource conversion chain according to claim 1 and 2 wherein the resource related data record comprises a non-fungible resource token (RNFT), in particular a non-fungible energy token (ENTF) which is generated automatically as soon as an incremental amount of energy is produced by an energy production asset and reported as energy related data by the energy production asset.

4. The computer-implemented method for managing a resource conversion chain according to claim 3 wherein the energy related data recorded in the non-fungible energy token (ENTF) is checked by a compliance algorithm against machine interpretable scheme requirements of a scheme provided by a scheme holder to generate an associated non-fungible certificate token (CNFT) if the compliance check provides a positive evaluation result.

5. The computer-implemented method for managing a resource conversion chain according to any of the preceding claims wherein resource related data comprises near real time data including machine signals.

6. The computer-implemented method for managing a resource conversion chain according to claim 5 wherein resource related near real time data is monitored and communicated by a gateway(GW)of the respective asset or is received from other data providers, in particular from a grid operator or from a service provider.

7. The computer-implemented method for managing a resource conversion chain according to any of the preceding claims 4 or 5 wherein the non-fungible energy token (ENTF) stores information comprising:
an NFT Identifier, an asset Identifier, a meter identifier ID, a signal identifier, an energy type, a token size of the token, a timestamp, a token quality, a total CO2 equivalent per amount of energy (MJ), and an energy amount (MJ) per amount of resource product.

8. The computer-implemented method for managing a resource conversion chain according to any of the preceding claims 3 to 7 wherein the non-fungible resource token (RNTF), in particular the non-fungible energy token (ENTF), is encrypted.

9. The computer-implemented method for managing a resource conversion chain according to any of the preceding claims 1 to 8 wherein the NFT identifier used to reference the associated non-fungible resource token (RNTF) and the generated non-fungible certificate token (CNFT) comprise additional certification information including the applied schemes, scheme version of the applied schemes and the certification body.

10. The computer-implemented method for managing a resource conversion chain according to any of the preceding claims 1 to 9 wherein the scheme comprises scheme metadata including a scheme title, a scheme holder, a scheme revision and a scheme validity of the scheme, communication restrictions, requirements regarding the certification process, requirements regarding the certificate holder, and requirements regarding the respective resource.

11. The computer-implemented method for managing a resource conversion chain according to any of the preceding claims 1 to 10 wherein the non-fungible certificate token (CNFT) is transferred automatically between digital wallets of asset owners, in particular on the basis of a resource purchase agreement between the asset owners.

12. The computer-implemented method for managing a resource con-version chain according to claim 11 wherein the certificate transfer comprises a pay-as-produced transfer or a pay-per-use transfer.

13. The computer-implemented method for managing a resource conversion chain according to any of the preceding claims 1 to 12 wherein the non-fungible certificate token (CNFT)is devaluated when the associated resource is consumed by a resource consumption asset and proof thereof is provided by the non-fungible resource token (RNFT) of the resource consumption asset.

14. The computer-implemented method for managing a resource conversion chain according to any of the preceding claims 1 to 13 wherein the non-fungible certificate token (CNFT) is devaluated automatically by expiration as defined in a scheme if no resource consumption has taken place and/or no proof of resource consumption has been provided.

15. The computer-implemented method for managing a resource conversion chain according to any of the preceding claims 1 to 14 the token size is changed independently from renewable characteristics.

16. A system for managing a resource conversion chain (RCC) having resource production assets adapted to generate at least one resource and having conversion assets adapted to consume resources for generation of products or other resources, the system comprising:
data records of the assets within the resource conversion chain (RCC) adapted to provide resource related data;
at least one processor adapted to perform a compliance check to evaluate whether the resource related data provided by a data record of an asset complies with machine interpretable requirements provided in a scheme;
a token generator adapted to generate a non-fungible certificate token (CNFT) if the compliance check provides a positive evaluation result; and
a digital wallet adapted to store the generated non-fungible certificate token (CNFT).

17. The system according to claim 16 wherein the token generator is adapted to generate automatically a non-fungible energy token (ENTF) as soon as an incremental amount of energy is produced by an energy production asset and reported as energy related data by the energy production asset to the token generator.

18. The system according to claim 17 wherein the energy related data recorded in the non-fungible energy token (ENTF) is checked by a compliance algorithm executed on the at least one processor of the system to perform the compliance check against machine interpretable scheme requirements of a scheme provided by a scheme holder to generate automatically an associated non-fungible certificate token (CNFT) if the compliance check provides a positive evaluation result.

19. A computer program product, comprising a computer readable storage medium having computer readable program code stored therein, said program code being executable by a processor of a computer system to implement a method, comprising commands which, when the program is executed by a computer, cause it to perform at least one of the steps of computer-implemented method of claim 1.
